# EUROPEAN PATENT SPECIFICATION

(11) **EP 3 348 429 B1**
(45) Date of publication and mention of the grant of the patent: **06.11.2019**
(21) Application number: 16843939.6
(22) Date of filing: 06.09.2016
(51) Int. Cl.: B60C 11/12, B60C 11/03, B60C 11/04

(54) **TIRE**
REIFEN
PNEU

(30) Priority: 09.09.2015 JP 2015177880
(43) Date of publication of application: 18.07.2018
(73) Proprietor: Bridgestone Corporation, Tokyo 104-8340 (JP)
(72) Inventor: HIRAISHI, Tomohiro, Tokyo 104-8340 (JP)
(74) Representative: Oxley, Robin John George
(86) International application number: PCT/JP2016/004064
(87) International publication number: WO 2017/043071

(56) References cited:
- CH-A- 172 548
- DE-U1-202008 018 041
- JP-A- H10 129 218
- JP-A- 2002 103 921
- JP-A- 2008 132 809
- JP-A- 2013 112 130
- JP-A- 2013 244 812
- JP-A- 2013 244 812
- JP-A- 2014 046 743
- JP-A- 2014 046 743
- JP-A- 2014 136 559
- JP-A- 2014 172 484
- JP-A- 2014 514 201
- JP-A- 2015 024 733
- JP-A- 2016 068 719
- US-A1- 2007 295 434

## Description

### TECHNICAL FIELD

This disclosure relates to a tire, in particular, high-performance tire with excellent drainage performance and turning performance.

### BACKGROUND

Recently, improvement of braking performance and driving performance on icy and snowy road or wet road surface has been achieved by disposing on a tread surface of a tire a plurality of so-called sipes, which are narrow grooves obtained by cutting. Specifically, increase of an edge component due to sipes has been expected as for icy and snowy road, and enhancement of drainage performance has been expected as for wet road surface. In either case, in addition to these performances, studies on the shape of sipes have been performed regarding their various performances on dry road surface.

For example, in order to suppress collapsing deformation of blocks when introducing sipes to the blocks, JP2006-341816A (PTL1) suggests shaping the sipes formed on the blocks into a shape extending in a zigzag way bent at a plurality of positions from a tread surface side to a tire radial inner side. However, it has been discovered that during rotation of the tire, the sipes of such shape extending in a zigzag way have different supporting positions supporting collapsing blocks in a sipe depth direction (tire radial direction) depending on a force input direction of the tread surface to land portions, which disperses the supporting effect.

Then, JP2013-244811 (PTL2) suggests using a shape in which a central region in a sipe depth direction among a plurality of bending points of sipes of a shape extending in a zigzag way is set as a main bending point, and two comparatively large surfaces are disposed in the central region in the sipe depth direction, to thereby prevent the supporting positions of the sipes from being dispersed in the depth direction of the sipes depending on the force input direction of the blocks.

Here, since the tires as described in PTL1 and PTL 2 mainly concern the performances on icy and snowy road, they have tread patterns composed of blocks partitioned by width direction grooves and circumferential grooves. In such tread patterns, in the case where sipes are introduced to the blocks, collapsing of the block becomes a problem as mentioned above. On the other hand, in a high-performance tire which ensured performances in high-speed region, it is a conventional method to sufficiently ensure a circumferential direction rigidity during high-speed running with rib-like land portions partitioned by only circumferential grooves and continuous in a tread circumferential direction. In tires having such rib pattern, from the viewpoint of the drainage performance, there are cases of disposing sipes extending in a tread width direction in a manner inclined with respect to a tire equator. Namely, the tire is provided for use with a specified rotation direction, with the sipes arranged so as to extend from tread edge sides toward a tire equator side forward in a tire rotation direction. In such high-performance tire, influence of partial deterioration of the land portion rigidity due to width direction sipes disposed on ribs becomes a problem when a strong side force is exerted to the tire, e.g., during lane change or during high-speed cornering when running on a circuit. Therefore, regarding tires having sipes on its rib-like land portions, in addition to the drainage performance, improvement of turning performance at high speed is strongly required.

Namely, in the aforementioned tire which ensures the performances in high-speed region, it is required to suppress a width direction rigidity of the tread and to improve the turning performance, in particular, the turning performance during high-speed running on dry road surface, while ensuring the drainage performance on wet road surface by applying sipes.

### CITATION LIST

### Patent Literature

PTL1: JP2006-341816A
PTL2: JP2013-244811 A.

Other known tires comprising a tread surface with a plurality of sipes are disclosed in US-20070295434-A and DE-202008018041-U.

### SUMMARY

### (Technical Problem)

Then, this disclosure aims to provide a tire capable of achieving both the drainage performance and the turning performance at a high degree, in particular, in the condition of high-speed running.

### (Solution to Problem)

We have intensively studied the method for achieving both the drainage performance and the turning performance of a tire which ensured the performances in high-speed region. As a result, we discovered that during high-speed cornering, by displacing the shape of sipes in accordance with the tire rotation direction, a resisting force against a side force can be ensured.

The present invention provides a tire as defined in claim 1.

### (Advantageous Effect)

According to this disclosure, it is possible to provide a tire capable of achieving both the drainage performance and the turning performance at a high degree, in particular, in the condition of high-speed running.

### BRIEF DESCRIPTION OF THE DRAWINGS

FIG. 1 is a development view illustrating a tread surface of a tire in accordance with one embodiment which is not according to the present invention but which is useful for understanding the present invention;
FIG. 2A is a cross-sectional view along the A-A line in FIG. 1;
FIG. 2B illustrates the shape of a sipe 2 spanning the width direction of the sipe 2;
FIG. 3 the shape of the sipes 2 according to this disclosure spanning the width direction of the sipes 2;
FIGS. 4A to 4C are cross-sectional views illustrating variation of the sipes in FIGS. 2 and 6;
FIG. 5 is a development view illustrating a tread surface of a tire in accordance with another embodiment which is according to the present invention;
FIG. 6 is a cross-sectional view along the B-B line in FIG. 5; and
FIG. 7 is a development view illustrating a tread surface of a tire in accordance with another embodiment which is according to the present invention.

### DETAILED DESCRIPTION

Hereinafter, by referring to the drawings, the tire of this disclosure is described in details by exemplifying an embodiment thereof.

Note that although omitted in the drawings, the tire of this disclosure includes: sidewall portions extending in a radial direction from a pair of bead portions; a carcass composed of a ply of organic fiber cords or steel cords, the carcass being continuous to a crown portion including a tread portion spanning between both the sidewall portions, and extending from one of the bead portions across the crown portion to the other one of the bead portions; and a belt composed of a steel cord layer arranged between the carcass and the tread portion.

### [Embodiment 1]

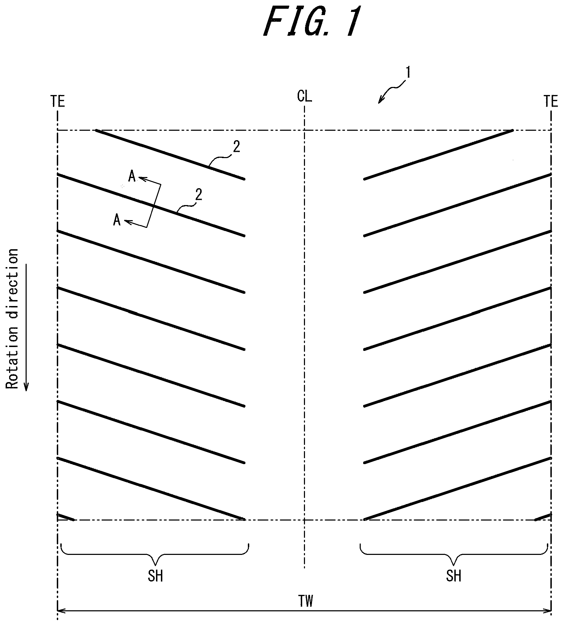

FIG. 1 is a development view showing a tread surface of a tire in accordance with one embodiment of this disclosure. The tire having the tread pattern as illustrated in FIG. 1 is installed to a vehicle with its rotation direction specified as a forward direction of the vehicle. Specifically, this tire has sipes 2 arranged on a tread surface 1 of a tread (hereinafter referred to as the "tread surface") in a manner spaced from each other in a circumferential direction of the tread, the sipes 2 extending forward in a tire rotation direction respectively from tread edge sides toward an equator side of the tire. In the illustrated example, a plurality of the sipes 2 extending linearly forward in the tire rotation direction respectively from tread edges TE toward the equator CL side are arranged on the tread surface 1 at a constant spacing from each other in the circumferential direction. The sipes 2 extend without crossing the equator CL on the tread surface 1, and in the illustrated example, each of them has one end opening to either one of the tread edges TE and the other end terminating within either region on the tread surface 1 facing each other on both sides of the tire equator.

The sipes 2 enhance the drainage performance of the tire by repeating a procedure of containing therein moisture within a ground contact region of the tread and then discharging the moisture out of the ground contact region, when running on wet road surface.

Here, the sipes 2 in this disclosure refer to cuttings with a width of 0.1 mm to 0.4 mm, each having at least a part of groove walls contacting each other when the tread surface 1 contacts the ground.

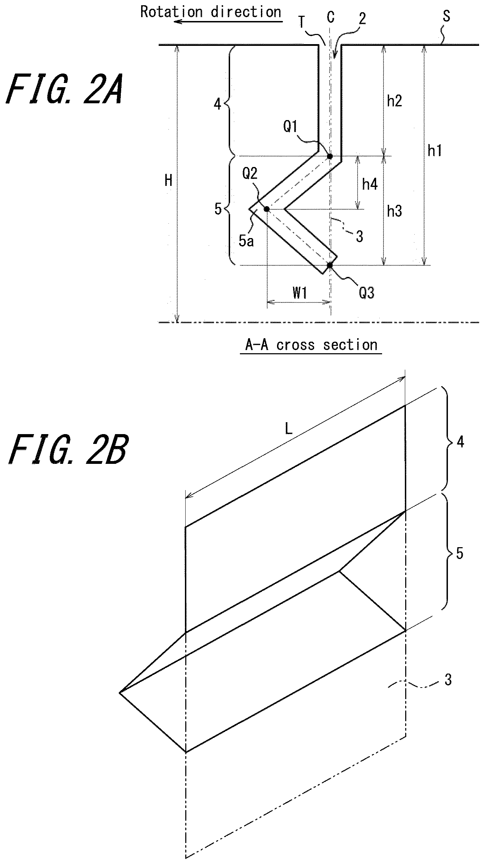

FIG. 2A is a cross-sectional view along the A-A line of the sipes 2 as illustrated in FIG. 1. FIG. 2B illustrates the shape of the sipes 2 spanning a longitudinal direction of their openings. The sipes 2 are spaces partitioned by being surrounded by two wall surfaces extending in the tire radial direction from the tread surface 1 at a constant opening width, while FIG. 2B illustrates the shape of the sipes 2 with the shape of either one of the two wall surfaces.

Each of the sipes 2 is shaped so as to have, when a plane extending from an open portion T of the sipe on the tread surface S of the tire in a radial direction of the tire in accordance with a shape of the open portion T is defined as a reference plane 3: an extending portion 4 extending in the radial direction of the tire from the open portion T along the reference plane 3 in accordance with the shape of the open portion T; and a protruding portion 5 protruding forward in the tire rotation direction from the reference plane 3 and returning to the reference plane 3 via a bend 5a.

According to such configuration, it is possible to suppress partial deterioration of the land portion rigidity during vehicle cornering, lane change, etc., and to improve the turning performance, while ensuring the drainage performance during straight running. Namely, during high-speed cornering, a side force occurs to the tire depending on the running speed of the vehicle and the cornering situation, and if the sipes 2 are within the ground contact region, the sidewalls partitioning the sipes are likely to separate from each other, which deteriorates the land portion rigidity of this part. Then, as mentioned above, by disposing the protruding portions 5 in an intermediate region in the depth direction of the sipes, a shape resisting a lateral input of force is applied to the sipes. Note that the reason for disposing the protruding portions 5 across the extending portions 4 is as follows. If the protruding portions 5 are formed from the opening portions T, acute angle portions are formed at the opening portions, which leads to a risk of rigidity deterioration around the opening portions and occurrence of rubber breakoff at the acute angle portions. Then, by using a shape extending at a certain depth in the radial direction from the tread surface, the aforementioned problem can be avoided.

Next, the dimensional ratio of the extending portions 4 and the protruding portions 5 in the sipe 2 is described in detail by referring to FIG. 2A. Note that as illustrated in FIG. 2A, the dimensions of each portion of the sipe 2 described in the following are defined in terms of a central line C (one-point chain line) across an opening width center of the sipe 2. Moreover, the "points" and "portions" on the cross section in FIG. 2A in the following description are actually "lines" and "planes" extending in the extension direction of the sipe. Therefore, the sipe 2 is described as one having a three-dimensional structure formed by a cross-sectional shape of a sipe width extending in the width direction.

As illustrated in FIG. 2A, in the sipe 2, when a length in the tire radial direction of the sipe 2 is defined as h1, a length from the opening portion T to Q1 on the central line C along the tire radial direction is defined as a radial length h2 of the extending portion 4, and similarly, a radial length of the protruding portion 5 from Q1 across Q2 to Q3 (from Q1 to Q3) is defined as h3, it is preferable that the following correlation is satisfied.

Namely, when a tread thickness, which is a thickness of a rubber portion on a tire radial outer side of the belt layer, is defined as H, the radial length h1 of the sipe 2 is preferably 45% or more and 90% or less, more preferably 60% or more and 85% or less of the thickness H. This is because that a depth of less than 45% is incapable of ensuring sufficient drainage performance, and a depth more than 90% deteriorates the land portion rigidity of the tread surface 1 around the sipe.

The radial length h2 of the extending portion 4 is preferably 10% or more and 75% or less, more preferably 35% or more and 65% or less of the radial length h1 of the sipe. This is for the purpose of simultaneously ensuring the drainage performance and suppressing deterioration of the land portion rigidity.

The radial length h3 of the protruding portion 5 is preferably 25% or more and 90% or less, more preferably 35% or more and 65% or less of the radial length h1 of the sipe. This is for the purpose of simultaneously ensuring the drainage performance and suppressing deterioration of the land portion rigidity.

A protrusion amount W1 of the protruding portion 5 of the sipe 2 (a rotation direction distance from Q1 to Q2) is preferably 90% or more and 100% or less of a radial length h4 from Q1 to Q2. This is because that if less than 90%, deformation of the sipes cannot be sufficiently suppressed, and if more than 100%, it is difficult to pull out a mold from the tire after tire vulcanization, which has to be avoided.

The protrusion amount W1 of the protruding portion 5 of the sipe 2 is preferably 15% or more and 100% or less, more preferably 40% or more and 60% or less of the radial length h2 of the extending portion 4. This is for the purpose of avoiding rubber breakoff between the protruding portions and the tread surface, and to prevent the tire from being difficult to be pulled out from the mold after tire vulcanization.

The sipes 2 may be any one extending forward in the tire rotation direction from the tread edge side toward the tire equator side, but are preferably respectively arranged in regions SH of 28% or more and 45% or less of a tread width TW from the tread edges TE. Note that the tread width TW refers to a linear distance from one of the tread edges TE to the other one of the tread edges TE.

Since a ground contact pressure distribution in the tread width direction of the tire during cornering is higher in the regions adjacent to the tread edges as compared to the central region, it is effective to improve the drainage performance of the tire by improving the drainage performance in the regions adjacent to the tread edges.

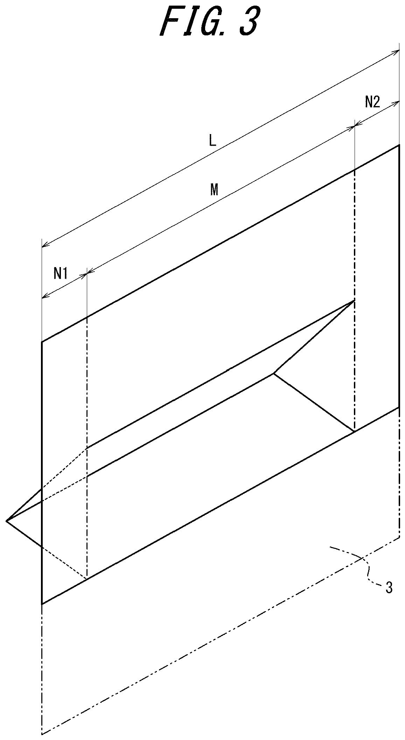

As illustrated in FIG. 3, the sipe 2 may have: a protruding region M, in which the extending portion 4 and the protruding region 5 formed in the radial direction of the sipe from the tread surface 1 extend in a direction in which the sipe extends on the tread surface; and plate-like regions N1 and N2 extending linearly along the reference plane 3 on both edge sides in a width direction of this protruding region M.

According to such configuration, limitation of deformation of the sipes is smaller in the plate-like regions, and thus it is possible to obtain an edge effect due to the sipes. Furthermore, deformation of the sipes in the protruding region M is suppressed, which suppresses rigidity deterioration of the tire as well. Moreover, it is possible to securely pull out a mold from a tire product without breaking the portions around the sipes after vulcanization molding, which is beneficial in manufacture.

The illustrated example in FIG. 3 has the plate-like regions N1 and N2 on both widthwise edge sides of the sipe, but may have the plate-like region N1 or N2 on only one widthwise edge of the sipe. Furthermore, the illustrated example has the same radial depths of the plate-like regions N1 and N2 and the protruding region M, but may have different radial depths of the plate-like regions N1 and N2 and the protruding region M as well.

It is preferable that the plate-like regions N1 and N2 have a total widthwise length of 50% or less of a widthwise length L of the sipe. This is for the purpose of obtaining sufficient suppression effect to the deformation of the sipes due to the protruding region M.

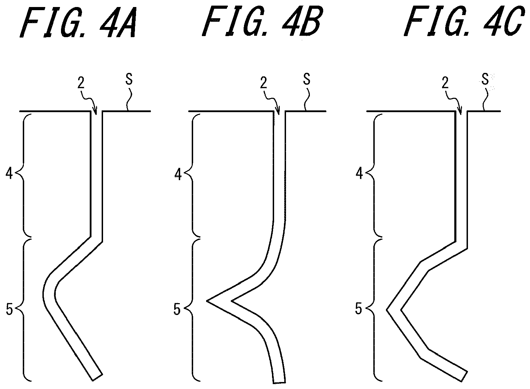

In the illustrated example in FIGS. 2A, 2B and 3, the protruding portion 5 is a combination of linear shapes, but may also be a curved shape as illustrated in FIG. 4A, a combination of curved shaped as illustrated in FIG. 4B, or a combination of shapes of straight lines bent in the vicinity of their centers as illustrated in FIG. 4C.

### [Embodiment 2]

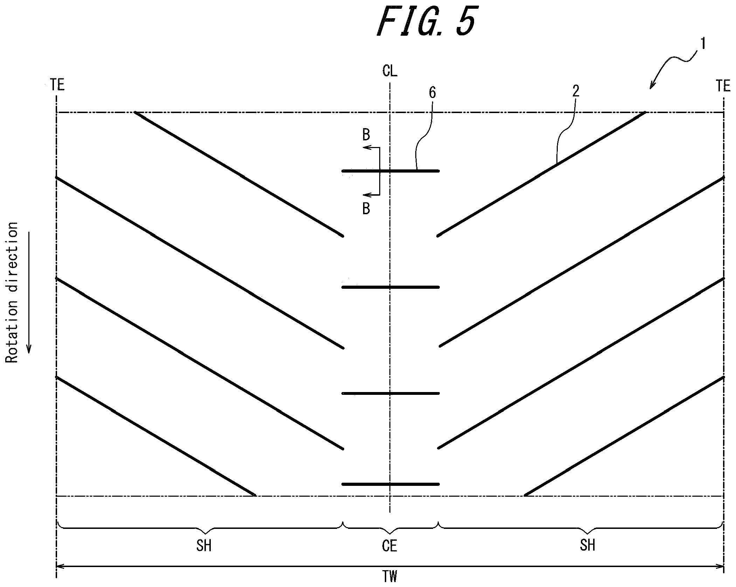

FIG. 5 is a developed view illustrating a tread of a tire according to another embodiment of this disclosure. The tire according to the present embodiment is also a tire with a specified rotation direction. Note that the same components as FIG. 1 in FIG. 5 are referred to as the same reference signs in FIG. 1, their description being omitted.

As illustrated in FIG. 5, this tire has on a tread surface 1 a plurality of sipes 2 arranged at a constant spacing from each other in a circumferential direction, the sipes 2 extending linearly forward in a tire rotation direction respectively from tread edges TE toward a equator CL side. Similarly as the sipes 2 in FIG. 1, the sipes 2 extend on the tread surface 1 without crossing the equator CL, and in the illustrated example, each of them has one end opening to the tread edges TE and the other end terminating in each region facing each other on both sides of the tire equator of the tread surface 1.

Similarly as the sipes 2 in FIG. 1, it is important that each of the sipes is configured so as to have the extending portion 4 and the protruding portion 5 as illustrated in FIG. 2. Namely, each of the sipes 2 is shaped so as to have, when a plane extending from an open portion T of the sipe on the tread surface S of the tire in a radial direction of the tire in accordance with a shape of the open portion T is defined as a reference plane 3: an extending portion 4 extending in the radial direction of the tire from the open portion T along the reference plane 3 in accordance with the shape of the open portion T; and a protruding portion 5 protruding forward in the tire rotation direction from the reference plane 3 and returning to the reference plane 3 via a bend 5a.

According to such configuration, it is possible to suppress partial deterioration of the land portion rigidity during vehicle cornering, lane change, etc., and to improve the turning performance, while ensuring the drainage performance during straight running. Note that the reason for disposing the protruding portions 5 across the extending portions 4 is as follows. If the protruding portions 5 are formed from the opening portions T, acute angle portions are formed at the opening portions, which leads to a risk of rigidity deterioration surrounding the opening portions and occurrence of rubber breakoff at the acute angle portions. Then, by using a shape extending at a certain depth in the radial direction from the tread surface, the aforementioned problem can be avoided.

Furthermore, similarly as the sipe 2 in FIG. 1, each of the sipes 2 may have, as illustrated in FIG. 3: a protruding region M extending in a direction in which the sipe extends on the tread surface; and plate-like regions N1 and N2 extending linearly along the reference plane 3 on both edge sides in a width direction of this protruding region M. Moreover, the protruding portion 5 is a combination of linear shapes, but may also be a curved shape as illustrated in FIG. 4A, a combination of curved shaped as illustrated in FIG. 4B, or a combination of shapes of straight lines bent in the vicinity of their centers as illustrated in FIG. 4C.

The sipes 2 are chamfered at opening edges of sidewalls partitioning the sipes, so as to improve the drainage performance on wet road surface.

Note that it is preferable that the regions SH in which the sipes 2 are respectively arranged are regions of 28% or more and 45% or less of the tread width TW from the tread edges TE.

Since a ground contact pressure distribution in the tread width direction of the tire during cornering is higher in the regions adjacent to the tread edges as compared to the central region, it is effective to further improve the drainage performance of the tire by improving the drainage performance in the regions adjacent to the tread edges.

As illustrated in FIG. 5, the tread surface 1 of this tire is provided with a plurality of width direction sipes 6 extending in the width direction crossing the tire equator CL, in a central region CE located between the regions SH in which the sipes 2 arranged on the tread edge sides are respectively disposed.

The central region of the tire tends to have comparatively high ground contact pressure distribution in the tire width direction during tire straight running, and by disposing sipes on such central region CE, it is particularly effective for improving the drainage performance during straight running. Note that a radial shape of the width direction sipes 6 may be either a shape extending straightly, or a shape having extending portions and protruding portion as described below.

Here, it is preferable that the central region CE in which the width direction sipes 6 is a region of 5% or more and 22% or less of the tread width TW from the equator CL. This is for the purpose of improving the drainage performance of the tire more securely.

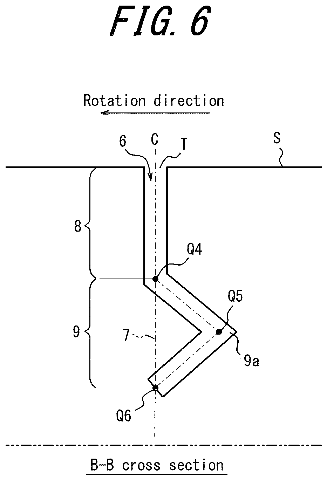

A preferable embodiment of the radial shape of the width direction sipes 6 is described below. FIG. 6 is a cross-sectional view of the width direction sipes 6 as illustrated in FIG. 5 along the B-B line.

Each of the width direction sipes 6 is shaped so as to have, when a plane extending from an open portion T of the sipe on the tread surface S of the tire in a radial direction of the tire in accordance with a shape of the open portion T is defined as a reference plane 7: an extending portion 8 extending in the radial direction of the tire from the open portion T along the reference plane 7 in accordance with the shape of the open portion T; and a protruding portion 9 protruding backward in the tire rotation direction from the reference plane 7 and returning to the reference plane 7 via a bend 9a.

According to such configuration, it is possible to ensure the drainage performance and the braking performance during straight running. Specifically, a ground contact pressure distribution in the tread width direction of the tire during braking tends to be higher in the central region as compared to the tread edges, and if the land portion rigidity in the central region is deteriorated, there is a risk of deterioration of the braking performance of the tire. Then, for the purpose of suppressing deterioration of the land portion rigidity during braking, protruding portions protruding in a direction resisting a torque are disposed, which suppresses deformation around the sipes in response to an input of force in the circumferential direction, and improves the braking performance by ensuing the rigidity. Note that the reason for disposing the protruding portions 9 across the extending portions 8 is as follows. If the protruding portions 9 are formed from the opening portions T, acute angle portions are formed at the opening portions, which leads to a risk of rigidity deterioration around the opening portions and occurrence of rubber breakoff at the acute angle portions. Then, by using a shape extending at a certain depth in the radial direction from the tread surface, the aforementioned problem can be avoided.

Here, the shapes of the sipes 2 respectively formed in the regions SH and the width direction sipes 6 formed in the central region CE have opposite protruding directions with respect to the tire rotation direction for the purpose of enabling suppression of rigidity deterioration both during cornering and during braking.

Each of the width direction sipes 6 may also have: a protruding region M extending in a direction in which the sipe extend on the tread surface; and a plate-like region extending linearly along the reference plane.

Furthermore, radial depths of the plate-like regions and the protruding regions may be different from each other.

In FIG. 6, the protruding portion 9 of the width direction sipes 6 is a combination of linear shapes, but may also be a curved shape as illustrated in FIG. 4A, a combination of curved shaped as illustrated in FIG. 4B, or a combination of shapes of straight lines bent in the vicinity of their centers as illustrated in FIG. 4C.

The width direction sipes 6 are chamfered at opening edges of sidewalls partitioning the sipes, so as to improve the drainage performance on wet road surface.

### [Embodiment 3]

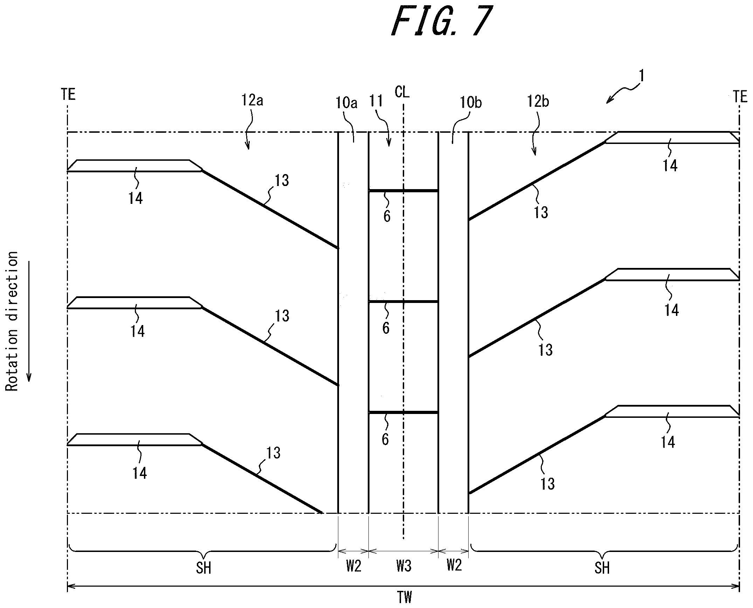

FIG. 7 is a development view illustrating a tread surface of a tire in accordance with another embodiment of this disclosure. The tire according to the present embodiment is also a tire with a specified rotation direction. Note that the configurations in FIG. 7 which are the same as FIG. 1 or FIG. 5 are marked with the same reference signs, the description thereof being omitted.

As illustrated in FIG. 7, this tire has three land portions formed on a tread surface 1, the three land portions being partitioned by tread edges TE and two circumferential grooves 10a, 10b extending along a tire equator CL. In the illustrated example, formed are: a central land portion 11 partitioned by the circumferential grooves 10a and 10b; and shoulder land portions 12a, 12b partitioned by the circumferential grooves 10a, 10b and the tread edges.

Here, it is preferable that an opening width W2 of the circumferential grooves 10a and 10b is 11% or more and 15% or less of a tread width TW. This is for the purpose of suppressing rigidity deterioration while maintaining the drainage performance.

As illustrated in FIG. 7, each of the two shoulder land portions 12a, 12b adjacent to the tread edges TE has a plurality of sipes 13 spaced from each other in a tread circumferential direction. In the illustrated example, the sipes 13 are grooves with a narrow opening width, each having one end opening to the circumferential groove 10a or 10b, and the other end extending toward either one of the tread edge TE sides and terminates in the vicinity of a widthwise center of the shoulder land portion 12a or 12b. The sipes 13 are arranged on each of the shoulder land portions 12a, 12b at a constant spacing from each other in the tread circumferential direction, while the shoulder land portions 12a, 12b are arranged in a manner displaced from each other in the tread circumferential direction.

The sipes 13 enhance the drainage performance of the tire by repeating a procedure of containing therein moisture within a ground contact region of the tread and then discharging the moisture out of the ground contact region, when running on wet road surface.

The illustrated example has lateral grooves 14 extending from the tread edges TE to the vicinity of the widthwise centers of the shoulder land portions 12a and 12b, the sipes 13 being respectively connected to the lateral grooves 14 in the vicinity of the widthwise centers of the shoulder land portions 12a and 12b.

Here, the reason for disposing the sipes 13 and the lateral grooves 14 on the shoulder land portions 12a and 12b adjacent to the tread edges TE is as follows. Since a ground contact pressure distribution in the tread width direction of the tire during vehicle cornering is higher in the regions adjacent to the tread edges as compared to the central region, it is effective to improve the drainage performance of the tire by improving the drainage performance in the regions adjacent to the tread edges.

It is important that similarly as the sipes 2 in FIG. 1, the sipes 13 are configured so as to have the extending portions 4 and the protruding portions 5 as illustrated in FIG. 2. Namely, each of the sipes 13 is shaped so as to have, when a plane extending from an open portion T of the sipe on the tread surface S of the tire in a radial direction of the tire in accordance with a shape of the open portion T is defined as a reference plane 3: an extending portion 4 extending in the radial direction of the tire from the open portion T along the reference plane 3 in accordance with the shape of the open portion T; and a protruding portion 5 protruding forward in the tire rotation direction from the reference plane 3 and returning to the reference plane 3 via a bend 5a.

According to such configuration, it is possible to suppress partial deterioration of the land portion rigidity during vehicle cornering, lane change, etc., and to improve the turning performance, while ensuring the drainage performance during straight running. Namely, during high-speed cornering, a side force occurs to the tire depending on the running speed of the vehicle and the cornering situation, and if the sipes 13 are within the ground contact region, the sidewalls partitioning the sipes are likely to separate from each other, which deteriorates the land portion rigidity of this part. Then, as mentioned above, by disposing the protruding portions 5 in an intermediate region in the depth direction of the sipes, a shape resisting a lateral input of force is applied to the sipes. Note that the reason for disposing the protruding portions 5 across the extending portions 4 on the opening portions sides is as follows. If the protruding portions 5 are formed from the opening portions T, acute angle portions are formed at the opening portions, which leads to a risk of rigidity deterioration around the opening portions and occurrence of rubber breakoff at the acute angle portions. Then, by using a shape extending at a certain depth in the radial direction from the tread surface, the aforementioned problem can be avoided.

Furthermore, similarly as the sipes 2, each of the sipes 13 may have, as illustrated in FIG. 3: a protruding region M extending in a direction in which the sipe extends on the tread surface; and plate-like regions N1 and N2 extending linearly along the reference plane 3 on both edge sides in a width direction of this protruding region M. Moreover, the protruding portion 5 is a combination of linear shapes, but may also be a curved shape as illustrated in FIG. 4A, a combination of curved shaped as illustrated in FIG. 4B, or a combination of shapes of straight lines bent in the vicinity of their centers as illustrated in FIG. 4C.

The sipes 13 are chamfered at opening edges of sidewalls partitioning the sipes, to thereby improve the drainage performance on wet road surface.

Note that the sipes 13 are preferably respectively arranged in regions SH of 28% or more and 45% or less of the tread width TW from the tread edges TE. Note that the regions SH on which the sipes 13 are respectively arranged and regions of the shoulder land portions 12a and 12b do not necessarily match each other, although FIG. 7 illustrates an example in which the regions SH and 12a, 12b match each other.

Since a ground contact pressure distribution in the tread width direction of the tire during cornering is higher in the regions adjacent to the tread edges as compared to the central region, it is effective to improve the drainage performance of the tire by improving the drainage performance in these regions.

In FIG. 7, the central land portion 11 has the width direction sipes 6 connecting the circumferential grooves 10a, 10b, and in the illustrated example, the plurality of width direction sipes 6 connecting the circumferential grooves 10a and 10b are arranged at a constant spacing in the circumferential direction. The central region of the tire tends to have comparatively high ground contact pressure distribution in the tire width direction during tire straight running, and by disposing sipes in this region, it is particularly effective for improving the drainage performance during straight running.

The width direction sipes 6 of the central land portion 11 have the same configuration as the width direction sipes 6 in FIG. 5. As illustrated in FIG. 6, each of the width direction sipes 6 is shaped so as to have, when a plane respectively extending from an open portion T of the sipe on the tread surface S of the tire in a radial direction of the tire in accordance with a shape of the open portion T is defined as a reference plane 7: an extending portion 8 extending in the radial direction of the tire from the open portion T along each of the reference plane 7 in accordance with the shape of the open portion T; and a protruding portion 9 protruding backward in the tire rotation direction from the reference plane 7 and returning to the reference plane 7 via a bend 9a.

According to such configuration, it is possible to ensure the drainage performance and braking performance during straight running. Specifically, a ground contact pressure distribution in the tread width direction of the tire during braking tends to be higher in the central region as compared to the tread edges, and if the land portion rigidity in the central region is deteriorated, there is a risk of deterioration of the braking performance of the tire. Then, for the purpose of suppressing deterioration of the land portion rigidity during braking, protruding portions protruding in a direction resisting a torque are disposed, which suppresses deformation around the sipes in response to an input of force in the circumferential direction, and improves the braking performance by ensuing the rigidity. Note that the reason for disposing the protruding portions 9 across the extending portions 8 is as follows. If the protruding portions 9 are formed from the opening portions T, acute angle portions are formed at the opening portions, which leads to a risk of rigidity deterioration around the opening portions and occurrence of rubber breakoff at the acute angle portions. Then, by using a shape extending at a certain depth in the radial direction from the tread surface, the aforementioned problem can be avoided.

Here, radial shapes of the sipes 13 formed on the shoulder land portions 12a and 12b and the width direction sipes 6 formed on the central land portion 11 have opposite protruding directions with respect to the tire rotation direction for the purpose of enabling suppression of rigidity deterioration both during cornering and during braking.

Each of the width direction sipes 6 may also have: a protruding region M extending in a direction in which the sipe extend on the tread surface; and a plate-like region extending linearly along the reference plane.

Furthermore, radial depths of the plate-like regions and the protruding regions may be different from each other.

In FIG. 6, the protruding portion 9 of the width direction sipes 6 is a combination of linear shapes, but may also be a curved shape as illustrated in FIG. 4A, a combination of curved shaped as illustrated in FIG. 4B, or a combination of shapes of straight lines bent in the vicinity of their centers as illustrated in FIG. 4C.

The width direction sipes 6 are chamfered at opening edges of sidewalls partitioning the sipes, so as to improve the drainage performance on wet road surface.

Note that it is preferable that the central land portion 11 on which the width direction sipes 6 are arranged is arranged in a region W3 of 5% or more and 10% or less of the tread width TW from the equator CL. This is for the purpose of improving the drainage performance of the tire more securely.

### EXAMPLES

Hereinafter, examples for this disclosure are described without being limited thereto.

Tires with a size of 205/55R16 were experimentally produced respectively at the specs as indicated in Table 1 according to the tread patterns as illustrated in FIGS. 1, 5 and 7. Note that all the sample tires had a radial length h1 of the sipes of 4 mm and an opening width of the sipes of 0.3 mm. Moreover, the tires having the tread pattern in FIG. 7 had an opening width W2 of the circumferential grooves of 12 mm. Each obtained sample tire was mounted to a rim (size: 6.5J), applied with an internal pressure (240 kPa), installed to a rear-wheel driving vehicle with a displacement of 2000 cc, and was subjected to the following evaluation by running on a test course in a one-person driving state.

Regarding each aforementioned tire, the drainage performance and the turning performance were evaluated by measuring a lap time for running on a test course having a dry road surface and a test course having a wet road surface (water depth: 1 mm).

The result was indexed with the evaluation result of the tire according to Sample Tire 1 (comparative example) as 100. Note that a large index indicates excellent drainage performance and turning performance.

**[Table 1]**

| Sample tire | Tread pattern | Sipes | | | | | | | Remarks |
|---|---|---|---|---|---|---|---|---|---|
| | | Protruding portion | H (mm) | h2 (mm) | h4 (mm) | W1 (mm) | Protruding portion shape | Plate-like region | |
| 1 | FIG. 1 | Absence | 5.5 | - | - | - | - | - | Comparative example |
| 2 | | Presence | | 2.2 | 0.6 | 0.6 | FIG. 2 | Presence | Example |
| 3 | | Presence | | | 0.6 | 0.6 | FIG. 2 | Absence | Example |
| 4 | | Presence | | | 0.6 | 0.6 | FIG. 2 | Presence | Example |
| 5 | | Presence | | | 1 | 0.6 | FIG. 2 | Presence | Example |
| 6 | | Presence | | | 0.3 | 0.6 | FIG. 2 | Presence | Example |
| 7 | | Presence | | | 0.6 | 1 | FIG. 2 | Presence | Example |
| 8 | | Presence | | | 0.6 | 0.2 | FIG. 2 | Presence | Example |
| 9 | | Presence | | | 0.6 | 0.6 | FIG. 4A | Presence | Example |
| 10 | | Presence | | | 0.6 | 0.6 | FIG. 4B | Presence | Example |
| 11 | | Presence | | | 0.6 | 0.6 | FIG. 4C | Presence | Example |
| 12 | FIG. 5 | Absence | 5.5 | - | - | - | - | - | Comparative example |
| 13 | | Presence | | 2.2 | 0.6 | 0.6 | FIG. 2 | Presence | Example |
| 14 | | Presence | | | 0.6 | 0.6 | FIG. 2 | Absence | Example |
| 15 | | Presence | | | 0.6 | 0.6 | FIG. 2 | Presence | Example |
| 16 | | Presence | | | 1 | 0.6 | FIG. 2 | Presence | Example |
| 17 | | Presence | | | 0.3 | 0.6 | FIG. 2 | Presence | Example |
| 18 | | Presence | | | 0.6 | 1 | FIG. 2 | Presence | Example |
| 19 | | Presence | | | 0.6 | 0.2 | FIG. 2 | Presence | Example |
| 20 | | Presence | | | 0.6 | 0.6 | FIG. 4A | Presence | Example |
| 21 | | Presence | | | 0.6 | 0.6 | FIG. 4B | Presence | Example |
| 22 | | Presence | | | 0.6 | 0.6 | FIG. 4C | Presence | Example |
| 23 | FIG. 7 | Absence | 5.5 | - | - | - | - | - | Comparative example |
| 24 | | Presence | | 2.2 | 0.6 | 0.6 | FIG. 2 | Presence | Example |
| 25 | | Presence | | | 0.6 | 0.6 | FIG. 2 | Absence | Example |
| 26 | | Presence | | | 0.6 | 0.6 | FIG. 2 | Presence | Example |
| 27 | | Presence | | | 1 | 0.6 | FIG. 2 | Presence | Example |
| 28 | | Presence | | | 0.3 | 0.6 | FIG. 2 | Presence | Example |
| 29 | | Presence | | | 0.6 | 1 | FIG. 2 | Presence | Example |
| 30 | | Presence | | | 0.6 | 0.2 | FIG. 2 | Presence | Example |
| 31 | | Presence | | | 0.6 | 0.6 | FIG. 4A | Presence | Example |
| 32 | | Presence | | | 0.6 | 0.6 | FIG. 4B | Presence | Example |
| 33 | | Presence | | | 0.6 | 0.6 | FIG. 4C | Presence | Example |

**[Table 2]**

| Sample tire | Drainage performance (wet road surface) | Turning performance (dry road surface) | Comprehensive evaluation |
|---|---|---|---|
| 1 | 100 | 100 | 200 |
| 2 | 110 | 120 | 230 |
| 3 | 108 | 115 | 223 |
| 4 | 112 | 117 | 229 |
| 5 | 102 | 104 | 206 |
| 6 | 98 | 95 | 193 |
| 7 | 98 | 95 | 193 |
| 8 | 102 | 104 | 206 |
| 9 | 109 | 118 | 227 |
| 10 | 103 | 107 | 210 |
| 11 | 105 | 110 | 215 |
| 12 | 103 | 98 | 201 |
| 13 | 113 | 118 | 231 |
| 14 | 111 | 113 | 224 |
| 15 | 115 | 115 | 230 |
| 16 | 105 | 102 | 207 |
| 17 | 101 | 93 | 194 |
| 18 | 101 | 93 | 194 |
| 19 | 105 | 102 | 207 |
| 20 | 112 | 116 | 228 |
| 21 | 106 | 105 | 211 |
| 22 | 108 | 108 | 216 |
| 23 | 125 | 90 | 215 |
| 24 | 135 | 115 | 250 |
| 25 | 133 | 110 | 243 |
| 26 | 137 | 112 | 249 |
| 27 | 127 | 99 | 226 |
| 28 | 123 | 90 | 213 |
| 29 | 123 | 90 | 213 |
| 30 | 127 | 99 | 226 |
| 31 | 134 | 113 | 247 |
| 32 | 128 | 102 | 230 |
| 33 | 130 | 105 | 235 |

As indicated in Table 2, the examples in which each of the sipes has a protruding portion have comprehensively higher drainage performance and turning performance as compared to the sample tire of Comparative Example 1. Moreover, Sample Tires 2, 13 and 24, in which the values of the sipes satisfy all the preferable ranges, each of the sipes has plate-like regions, and the shape of the protruding portions is a combination of linear shapes, obtained highest comprehensive evaluation among the tread patterns.

### REFERENCE SIGNS LIST

- 1: tread surface
- 2: sipe
- 3: reference plane
- 4: extending portion
- 5: protruding portion
- 6: width direction sipe
- 7: reference plane
- 8: extending portion
- 9: protruding portion
- 10a,: 10b circumferential groove
- 11: central land portion
- 12a, 12b: shoulder land portion
- 13: sipe
- 14: lateral groove
- CL: tire equator
- TE: tire tread edge

## Claims

1. A tire comprising a tread having tread edges (TE) and a tread surface (1) on which tread surface (1) a plurality of sipes are arranged in a manner spaced from each other in a circumferential direction of the tread, each of the sipes extending forward in a tire rotation direction from either tread edge (TE) side toward a tire equator (CL) side, wherein:
the plurality of sipes include sipes (2) arranged on the tread edge (TE) sides, each of the sipes (2) arranged on the tread edge (TE) sides being shaped so as to consist of, when a plane extending from an open portion (T) of the sipe (3) in a radial direction of the tire in accordance with a shape of the open portion (T) is defined as a reference plane (3):
an extending portion (4) extending in the radial direction of the tire from the open portion (T) along the reference plane (3); and
a protruding portion (5) protruding forward in the tire rotation direction from the reference plane (3) and returning to the reference plane (3) via a bend (5a), wherein:
the tire further comprises a plurality of width direction sipes (6) extending in a width direction crossing a tire equator (CL), in a central region (CE) located between the regions (SH) in which the sipes (2) arranged on the tread edge (TE) sides are disposed, wherein:
each of the width direction sipes (6) is shaped so as to consist of, when a plane extending from an open portion (T) of the width direction sipe (6) in the radial direction of the tire in accordance with a shape of the open portion (T) is defined as a reference plane (7):
an extending portion (8) extending in the radial direction of the tire from the open portion (T) along the reference plane (7); and
a protruding portion (9) protruding backward in the tire rotation direction from the reference plane (7) and returning to the reference plane (7) via a bend (9a), and wherein:
the sipes are cuttings with a width of 0.1 mm to 0.4 mm.

2. The tire according to claim 1, wherein:
the sipes (2) arranged on the tread edge (TE) sides are respectively arranged in regions of 28% or more and 45% or less of a tread width (TW) from the tread edges (TE).

3. The tire according to claim 1, wherein:
the tread surface (1) is partitioned, by two circumferential grooves (10a, 10b) extending along the tire equator (CL) and the tread edges (TE), into: a central land portion (11) located between the circumferential grooves (10a, 10b); and shoulder land portions (12a, 12b) respectively located between the circumferential grooves (10a, 10b) and the tread edges (TE).

4. The tire according to claim 3, wherein:
each of the sipes (2) arranged on the tread edge (TE) sides is arranged on either one of the shoulder land portions (12a, 12b).

5. The tire according to claim 3, wherein:
the width direction sipes (6) are arranged on the central land portion (11).

## Patentansprüche

1. Reifen, umfassend eine Lauffläche, welche Laufflächenränder (TE) und eine Lauffläche (1) aufweist, auf welcher Lauffläche (1) eine Mehrzahl von Lamellen voneinander beabstandet in einer Umfangsrichtung der Lauffläche angeordnet ist, wobei jede der Lamellen sich nach vorne in einer Reifendrehrichtung von einer jeweiligen Seite der Laufflächenränder (TE) zu einer Seite des Reifenäquators (CL) hin erstreckt, wobei:
die Mehrzahl von Lamellen Lamellen (2) umfasst, welche auf den Seiten der Laufflächenränder (TE) angeordnet sind, wobei jede der Lamellen (2), die auf den Seiten der Laufflächenränder (TE) angeordnet sind, so geformt ist, dass sie, wenn eine Ebene, die sich von einem offenen Abschnitt (T) der Lamelle (3) in einer Radialrichtung des Reifens gemäß einer Form des offenen Abschnitts (T) als Referenzebene (3) definiert ist, aus Folgendem besteht:
einen verlängerten Abschnitt (4), welcher sich in der Radialrichtung des Reifens vom offenen Abschnitt (T) entlang der Referenzebene (3) erstreckt; und
einen vorstehenden Abschnitt (5), welcher nach vorne in der Reifendrehrichtung von der Referenzebene (3) vorsteht und über eine Biegung (5a) zur Referenzebene (3) zurückkehrt, wobei:
der Reifen ferner eine Mehrzahl von Breitrichtungs-Lamellen (6) umfasst, welche sich in einer Breitrichtung erstrecken und das Reifenäquator (CL) in einem mittleren Bereich (CE) schneiden, der zwischen den Bereichen (SH) angeordnet ist, in welchen die Lamellen (2) angeordnet sind, die auf den Seiten der Laufflächenränder (TE) angeordnet sind, wobei:
jede der Breitrichtungs-Lamellen (6) so geformt ist, dass sie, wenn eine Ebene, die sich von einem offenen Abschnitt (T) der Breitrichtungs-Lamelle (6) in der Radialrichtung des Reifens gemäß einer Form des offenen Abschnitts (T) erstreckt, als Referenzebene (7) definiert ist, aus Folgendem besteht:
einen verlängerten Abschnitt (8), welcher sich in der Radialrichtung des Reifens vom offenen Abschnitt (T) entlang der Referenzebene (3) erstreckt; und
einen vorstehenden Abschnitt (9), welcher nach hinten in der Reifendrehrichtung von der Referenzebene (7) vorsteht und über eine Biegung (9a) zur Referenzebene (7) zurückkehrt, wobei:
die Lamellen Einschnitte sind, welche eine Breite zwischen 0,1 mm und 0,4 mm aufweisen.

2. Reifen nach Anspruch 1, wobei:
die Lamellen (2), welche auf den Seiten der Laufflächenränder (TE) angeordnet sind, in Bereichen angeordnet sind, die 28% oder mehr und 45% oder weniger einer Laufflächenbreite (TW) von den Laufflächenrändern (TE) entfernt sind.

3. Reifen nach Anspruch 1, wobei:
die Lauffläche (1) durch zwei Umfangsrillen (10a, 10b), die sich entlang des Reifenäquators (CL) erstrecken, und durch die Laufflächenränder (TE) in Folgendes unterteilt ist: einen mittleren Stegbereich (11), welcher zwischen den Umfangsrillen (10a, 10b) angeordnet ist; und Schulterstegbereiche (12a, 12b), welche jeweils zwischen den Umfangsrillen (10a, 10b) und den Laufflächenrändern (TE) angeordnet sind.

4. Reifen nach Anspruch 3, wobei:
jede der Lamellen (2), welche auf den Seiten der Laufflächenränder (TE) angeordnet sind, auf jedem der Schulterstegbereiche (12a, 12b) angeordnet ist.

5. Reifen nach Anspruch 3, wobei:
die Breitrichtungs-Lamellen (6) auf dem mittleren Stegabschnitt (11) angeordnet sind.

## Revendications

1. Pneu comprenant une bande de roulement comportant des rebords de bande de roulement (TE) et une surface de bande de roulement (1) sur laquelle surface de bande de roulement (1) une pluralité de lamelles sont agencées de manière espacée l'une de l'autre dans une direction circonférentielle de la bande de roulement, chacune des lamelles s'étendant vers l'avant dans le sens de rotation du pneu depuis chaque côté de rebord de bande de roulement (TE) vers un côté d'équateur du pneu (CL), dans lequel :
la pluralité des lamelles incluent des lamelles (2) agencées sur les côtés de rebord de bande de roulement (TE), chacune des lamelles (2) agencées sur les côtés de rebord de bande de roulement (TE) étant formée de façon à être constituée, lorsqu'un plan s'étendant à partir d'une partie ouverte (T) de la lamelle (3) dans le sens radial du pneu conformément à une forme de la partie ouverte (T) est défini comme plan de référence (3) :
d'une partie d'extension (4) s'étendant dans la direction radiale du pneu à partir de la partie ouverte (T) le long d'un plan de référence (3), et
d'une partie saillante (5) faisant saillie vers l'avant dans le sens de rotation du pneu à partir du plan de référence (3) et retournant jusqu'au plan de référence (3) via une courbure (5a),
dans lequel :
le pneu comprend en outre une pluralité de lamelles dans le sens de la largeur (6) qui s'étendent dans le sens de la largeur et traversent l'équateur du pneu (CL), dans une région centrale (CE) située entre les régions (SH) dans lesquelles les lamelles (2) agencées sur les côtés de rebord de bande de roulement (TE) sont disposées, et
chacune des lamelles dans le sens de la largeur (6) est formée de façon à être constituée, lorsqu'un plan s'étendant à partir d'une partie ouverte (T) de la lamelle (6) dans le sens de la largeur dans la direction radiale du pneu conformément à une forme de la partie ouverte (T) est défini comme plan de référence (7) :
d'une partie d'extension (8) s'étendant dans la direction radiale du pneu à partir de la partie ouverte (T) le long d'un plan de référence (7), et
d'une partie saillante (9) faisant saillie vers l'arrière dans le sens de rotation du pneu à partir du plan de référence (7) et retournant jusqu'au plan de référence (7) via une courbure (9a),
les lamelles sont des découpes ayant une largeur de 0,1 mm à 0,4 mm.

2. Pneu selon la revendication 1, dans lequel :
les lamelles (2) agencées sur les côtés de rebord de bande de roulement (TE) sont respectivement agencées dans des régions de 28 % ou plus et de 45 % ou moins d'une largeur de bande de roulement (TW) à partir des rebords de bande de roulement (TE).

3. Pneu selon la revendication 1, dans lequel :
la surface de bande de roulement (1) est séparée par deux rainures circonférentielles (10a, 10b) s'étendant le long de l'équateur du pneu (CL) et par les rebords de bande de roulement (TE) en : une partie d'appui centrale (11) située entre les rainures circonférentielles (10a, 10b) et des parties d'appui d'épaulement (12a, 12b) situées respectivement entre les rainures circonférentielles (10a, 10b) et les rebords de bande de roulement (TE).

4. Pneu selon la revendication 3, dans lequel :
chacune des lamelles (2) agencées sur les côtés de rebord de bande de roulement (TE) est agencée sur chaque partie d'appui d'épaulement (12a, 12b).

5. Pneu selon la revendication 3, dans lequel :
les lamelles dans le sens de la largeur (6) sont agencées sur la partie d'appui centrale (11).
